# EUROPEAN PATENT SPECIFICATION

(11) **EP 2 371 689 B1**
(45) Date of publication and mention of the grant of the patent: **17.07.2013**
(21) Application number: 11159505.4
(22) Date of filing: 24.03.2011
(51) Int. Cl.: B62J 37/00, B62K 11/10

(54) **Motorcycle**
Motorrad
Motocyclette

(30) Priority: 31.03.2010 JP 2010082668
(43) Date of publication of application: 05.10.2011
(73) Proprietor: Honda Motor Co., Ltd., Tokyo 107-8556 (JP)
(72) Inventor: Yamada, Hiroshi, SAITAMA 351-0193 (JP)
(74) Representative: Ilgart, Jean-Christophe

(56) References cited:
- US-A- 5 433 286
- US-A1- 2002 166 709

## Description

### [Technical Field]

The present invention relates to an improvement in a motorcycle, particularly to an improvement of the layout of a fuel filter provided in a motorcycle.

### [Background Art]

As a conventional motorcycle, there has been known one in which a fuel filter is provided at an intermediate part of a fuel supply line for supplying a fuel in a fuel tank to a combustion chamber of an engine (see, for example, Patent Document 1 (FIGS. 1 and 2)).

As shown in FIG. 1 of Patent Document 1, a motorcycle (10) (parenthesized symbols are those used in Patent Document 1, here and hereafter) is provided with a unit swing type engine (22) swingably mounted to a rear frame (135b), and a fuel tank (25) disposed under a step floor (24) on which the rider's feet are put on the front side of the engine (22).
In addition, a fuel filter (34) is disposed in a space between a cylinder head (308) and the fuel tank (25). Besides, as shown in FIG. 2 of Patent Document 1, the fuel filter (34) is disposed on an upper surface of an under cover (137). The fuel in the fuel tank (25) is supplied through a conduit (321) to the fuel filter (34), where it is clarified, before being supplied to the engine through a fuel pump (26).

In Patent Document 1, however, the fuel filter (34) is supported by the upper surface of the under cover (137) constituting a body cover, so that in order to enlarge the fuel filter (34) in size, it is necessary to enhance the rigidity of the under cover (137), which leads to an increase in material thickness of the under cover. Therefore, when a decrease in material thickness of the under cover (137) is contrived, it is impossible to use a large-sized fuel filter (34).
Thus, there is a need for a motorcycle in which the size of a fuel filter can be set freely, without any restriction imposed by a body cover.
[Patent Document 1]
   Patent Laid-open No. 2002-206466
Documents US2002/166709 and US 5 433 286 also disclose a relevant prior art.
Document US 2002/166709 discloses a motorcycle according to the preamble of claim 1.

### [Summary of the Invention]

### [Problem to be Solved by the Invention]

It is an object of the present invention to provide a motorcycle in which the capacity of a fuel filter can be set freely, without any restriction imposed by a body cover.

### [Means for Solving the Problem]

The invention according to claim 1 provides a motorcycle including a body frame having a head pipe and a pair of left and right main frames extending from the head pipe toward a vehicle rear side, an engine supported on the body frame, a fuel tank supported on the body frame on a vehicle front side relative to the engine, a fuel supply line through which a fuel in the fuel tank is adapted to be supplied to the engine, and a fuel filter disposed at an intermediate part of the fuel supply line, wherein the body frame has a cross frame which is disposed between the fuel tank and the engine and which connects the pair of left and right main frames to each other, and the fuel filter is mounted to the cross frame.

The fuel filter is mounted to the cross frame in such a manner that a lower end of the fuel filter is located above a lower end of the cross frame.

The engine has a crankcase for containing a crankshaft therein, and a cylinder unit projecting from the crankcase toward the vehicle front side; an upper portion of the crankcase is connected to the body frame through a link, whereby the engine is supported on the body frame in a vertically swingable manner; the cross frame is located on a lower side and the vehicle front side relative to the cylinder unit, and the fuel filter is mounted to a rear side of the cross frame in such a manner that the fuel filter can be mounted and dismounted from the vehicle rear side.

The invention according to claim 2 is characterized in that the cylinder unit has an exhaust pipe extending from a lower portion thereof toward the vehicle rear side; and the exhaust pipe is disposed on one side in a vehicle width direction of a vehicle body center line, and the fuel filter is disposed on the other side in the vehicle width direction of the vehicle body center line.

The invention according to claim 3 is characterized in that the motorcycle includes an under cover for covering the pair of left and right main frames, the fuel tank and the fuel filter from below, and a gap for avoiding interference of the swinging engine with the under cover is secured between a rear end portion of the under cover and the engine, and the gap is set to be greater than an outer shape of the fuel filter so as to permit the fuel filter to be mounted and dismounted therethrough.

The invention according to claim 4 is characterized in that the cylinder unit projects from a front portion of the crankcase toward an upper front side, and at least a part of the fuel filter is disposed on a front side relative to the cylinder unit.

The invention according to claim 5 is characterized in that the fuel filter is disposed with its longitudinal direction set along the extending direction of the cross frame.

The invention according to claim 6 is characterized in that the cross frame is provided with a filter support bracket which is substantially C-shaped in section, and the fuel filter is dismountably mounted on the filter support bracket through elastic deformation of the filter support bracket.

The invention according to claim 7 is characterized in that the fuel supply line is provided with a fuel supply device by which the fuel in the fuel tank is adapted to be supplied to the engine, and with a fuel pump by which the fuel in the fuel tank is adapted to be supplied under pressure to the fuel supply device; and the fuel supply device is disposed at a position above the fuel filter.

The invention according to claim 8 is characterized in that the fuel supply line is provided with a pressure regulator which is disposed between the fuel filter and the fuel supply device and by which a portion of the fuel is adapted to be returned to the fuel tank when the fuel pressure between the fuel pump and the fuel supply device is increased to reach a predetermined pressure, and the pressure regulator and the fuel filter are provided between the fuel pump and the fuel supply device in a vehicle front-rear direction.

The invention according to claim 11 is characterized in that the fuel supply line is provided with a pre-pump filter on an upstream side of the fuel pump, and the fuel filter is set to be finer in pore size than the pre-pump filter.

### [Effect of the Invention]

In the invention according to claim 1, the body frame has the cross frame which is disposed between the fuel tank and the engine and which connects the pair of left and right main frames to each other, and the fuel filter is mounted to the cross frame. Since the fuel filter is supported on the cross frame, the fuel filter can be firmly supported by the cross frame while utilizing a space formed between the engine and the fuel tank. Consequently, it is possible to use a large-sized fuel filter while contriving a decrease in material thickness of the body cover. In other words, the capacity of the fuel filter can be set freely, without any restriction imposed by the body cover.

In the invention according to claim 1, the fuel filter is mounted to the cross frame in such a manner that the lower end of the fuel filter is located above the lower end of the cross frame. Since the fuel filter is located above the lower end of the cross frame, the lower side of the fuel filter can be protected by the cross frame.

In the invention according to claim 1, a space in which the cylinder unit can be swung is secured and no link is disposed, on the front side of the crankcase and the lower side of the cylinder unit, so that a comparatively large space is formed on the front side of the crankcase and the lower side of the cylinder unit.

As a result, since the fuel filter is mounted to the rear side of the cross frame located on the lower and front side relative to the cylinder unit projecting forward from the crankcase in such a manner that the fuel filter can be mounted and dismounted from the vehicle rear side, mounting and dismounting of the fuel filter can be carried out while utilizing the space on the front side of the crankcase and the lower side of the cylinder unit. Consequently, the mounting and dismounting operations can be carried out easily.

In the invention according to claim 2, the exhaust pipe is disposed on one side in the vehicle width direction of the vehicle body center line, while the fuel filter is disposed on the other side in the vehicle width direction of the vehicle body center line. Since the fuel filter is disposed on the other side in the vehicle width direction of the vehicle body center line in relation to the exhaust pipe which extends from a lower portion of the cylinder unit toward the vehicle rear side, the exhaust pipe does not obstruct operations of mounting and dismounting the fuel filter, and, accordingly, the mounting and dismounting operations can be carried out easily.

In the invention according to claim 3, the lower side of the fuel filter is covered with the under cover, so that deposition of muddy water or the like to the fuel filter can be prevented.
In addition, the gap greater than the outer shape of the fuel filter is provided between the under cover and the engine, and, therefore, mounting and dismounting of the fuel filter can be easily carried out through the gap, without dismounting other vehicle component parts. Further, since it is unnecessary to provide such a component part as a maintenance lid, an increase in the number of component parts can be restrained.

In the invention according to claim 4, the cylinder unit projects from a front portion of the crankcase toward an upper front side. A space formed between the cylinder unit and the ground is widened along the direction toward the vehicle front side. This ensures that with at least a part of the fuel filter being disposed on the front side relative to the cylinder unit, the space widened along the direction toward the vehicle front side can be utilized. Consequently, a large-sized fuel filter can be disposed.

In the invention according to claim 5, the fuel filter is disposed with its longitudinal direction set along the extending direction of the cross frame. Since the amount of projection of the fuel filter from the cross frame can be suppressed, the under cover for covering the lower side of the fuel filter can be made small in size.

In the invention according to claim 6, the cross frame is provided with the filter support bracket which is substantially C-shaped in section. Since the fuel filter is dismountably mounted through elastic deformation of the filter support bracket, operations of mounting and dismounting the fuel filter can be easily carried out without using any tool.
Further, since the fuel filter can be mounted and dismounted without using any tool, the operations of mounting and dismounting the fuel filter can be easily performed through the space formed on the front side of the crankcase and the lower side of the cylinder unit.

In the invention according to claim 7, the fuel supply device is disposed at a position above the fuel filter. Since the fuel supply line between the fuel filter and the fuel supply device extends upward from the fuel filter, leakage of the fuel from the fuel supply device due to the weight of the fuel collected in the fuel filter can be restrained, even in the case where the vehicle is parked for a long period of time.

In the invention according to claim 8, the pressure regulator and the fuel filter are provided between the fuel pump and the fuel supply device in the vehicle front-rear direction. Therefore, the fuel supply line from the fuel pump to the fuel supply device can be presented from becoming redundant.

In the invention according to claim 9, the fuel filter is set to be finer in pore size than the pre-pump filter. Thus, the pore size in the fuel filter and the pore size in the pre-pump filter are set different from each other. This ensures that even in the case of using a fuel containing fine dust, such as ethanol, coarser dust can be trapped by the pre-pump filter and finer dust having failed to be trapped by the pre-pump filter can be trapped by the fuel filter. Accordingly, such a fuel as ethanol can also be used.

In addition, since coarser dust is trapped by the pre-pump filter and therefore coarser dust is not trapped by the fuel filter, the possibility of clogging of the fuel filter can be lowered, and the frequency of replacement of the fuel filter can be lowered. Further, since the pre-pump filter is coarse in pore size, possibility of clogging thereof can be lowered, so that the pre-pump filter is restrained from constituting a resistance against the operation of the fuel pump. This enables adoption of an inexpensive fuel pump.

### [Brief Description of the Drawings]

FIG. 1 is a side view of a motorcycle according to the present invention.
FIG. 2 is a plan view of the motorcycle according to the present invention.
FIG. 3 is a plan view of an essential part of the motor cycle.
FIG. 4 is a sectional view taken along line 4-4 of FIG. 3.
FIG. 5 illustrates mounting of a fuel filter and a filter support bracket.
FIG. 6 is a sectional view taken along line 6-6 of FIG. 1.
FIG. 7 illustrates a gap between an under cover and an engine.
FIG. 8 is a sectional view of the fuel filter.
FIG. 9 is a sectional view of a pressure regulator.
FIG. 10 is a system diagram of a fuel supply line.
FIG. 11 is a plan view of an essential part of a motorcycle according to another embodiment.

### [Mode for Carrying Out the Invention]

An embodiment of the present invention will be described below based on the accompanying drawings. Incidentally, the drawings are to be viewed according to the orientation of the reference symbols, and arrows (FRONT) in the drawings indicate the vehicle front side.

### [Example 1]

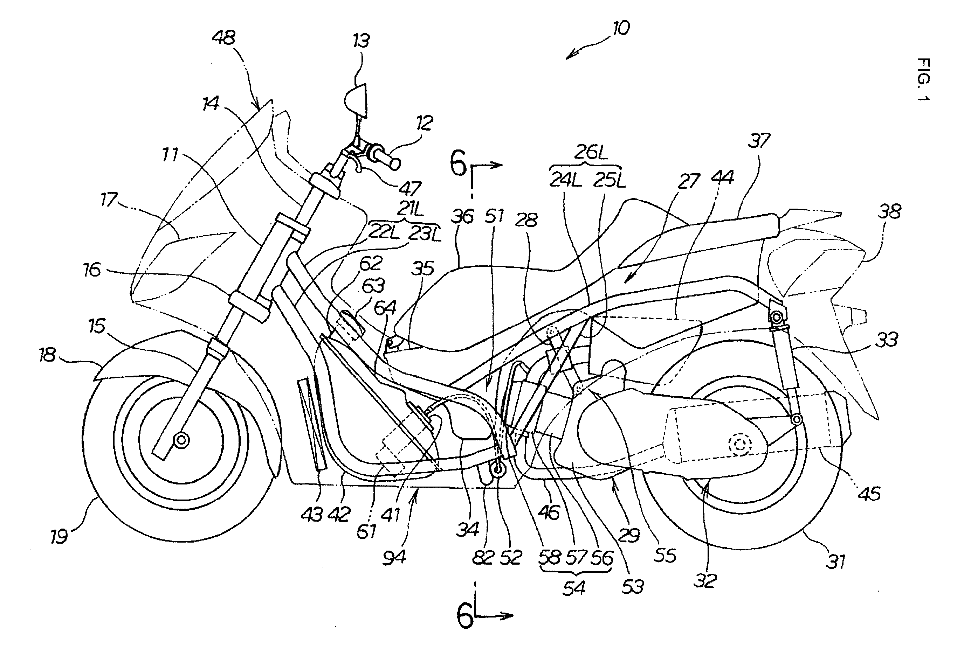

First, Example 1 of the present invention will be described based on the drawings.
As shown in FIG. 1, a motorcycle 10 includes a handle 12 steerably mounted to a head pipe 11, side mirrors 13 which are raised from the handle 12 and by which the driver checks the rear side, a stem pipe 14 mounted to the lower end of the handle 12, a bottom bridge 16 which is mounted to the lower end of the stem pipe 14 and which supports the upper ends of a pair of left and right front forks 15, a headlamp 17 which is disposed on the front side of the head pipe 11 and which is turned on while facing the vehicle front side, and a front wheel 19 which is supported on the front forks 15 and the upper side of which is covered with a front fender 18.

In addition, a pair of left and right main frames 21L, R (only 21L is shown) are extended from the head pipe 11 toward a rear lower side. The main frames 21L, R include a pair of left and right upper frames 22L, R (only 22L is shown) extending from the head pipe 11 toward a lower rear side of the vehicle, and a pair of left and right lower frames 23L, R (only 23L is shown) disposed under the upper frames 22L, R and extending from a lower portion of the head pipe 11 toward a lower rear side.
A pair of left and right seat rails 24L, R (only 24L is shown) are extended from intermediate portions of the upper frames 22L, R toward a rear upper side of the vehicle, and a pair of left and right sub frames 25L, R (only 25L is shown) are extended from the rear ends of the upper frames 22L, R to a rear upper side of the vehicle toward the seat rails 24L, R.
It can be said that the seat rails 24L, R and the sub frames 25L, R constitute rear frames 26L, R (only 26L is shown), and the rear frames 26L, R extend from rear portions of the main frames 21L, R toward a rear upper side of the vehicle.
The head pipe 11, the main frames 21L, R, the rear frames 26L, R and the like constitute a body frame 27.

Besides, an engine 29 is supported on the body frame 27 (the rear frames 26L, R, specifically, the seat rails 24L, R) through a link 28 in a vertically swingable manner, and the engine 29 is provided with a power transmission mechanism 32 for transmitting the power of the engine 29 to a rear wheel 31. A rear cushion 33 is extended from the rear end of the seat rails 24L, R toward the rear end of the power transmission mechanism 32.

A storage box 35 having a bulged part 34 bulged to the lower side is supported on the main frames 21L, R and the seat rails 24L, R; a front seat 36 on which the driver is seated is disposed on the upper side of the storage box 35; a rear seat 37 on which a pillion passenger is seated is disposed on the rear side of the front seat 36; a tail lamp 38 turned on when a brake is applied is disposed on the rear side of the rear seat 37; and a fuel tank 42 having a fuel pump 41 for feeding a fuel under pressure is supported on the lower frames 23L, R.
The storage box 35 is provided between the fuel tank 42 and the engine 29.

In addition, a radiator 43 by which cooling water warmed by the engine 29 is cooled is disposed on the front side of the fuel tank 42, an air cleaner 44 for supplying air to the engine 29 is disposed on the upper side of the engine 29, an exhaust pipe 46 for feeding out an exhaust gas is extended from the lower side of the engine 29 toward a muffler 45 disposed on the right side of the vehicle, a brake lever 47 for operating to brake the rear wheel 31 is mounted to the handle 12, and the vehicle body is covered with a body cover 48 indicated by imaginary lines.

A fuel supply line 51 for feeding the fuel in the fuel tank 42 to the engine 29 is provided near the center of the vehicle, and a fuel filter 52 is provided at an intermediate portion of the fuel supply line 51. The engine 29 has a crankcase 53 for containing a crankshaft therein, and a cylinder unit 54 projecting from the crankcase 53 toward the vehicle front side, and an upper portion 55 of the crankcase 53 is supported on the body frame 27 through a link 28.

The cylinder unit 54 is composed of a cylinder block 56 projected forward from a front portion of the crankcase 53, a cylinder head 57 provided at the front end of the cylinder block 56, and a head cover 58 provided at the front end of the cylinder head 57.

In addition, the fuel supply line 51 is provided with a pre-pump filter 61 on the upstream side of the fuel pump 41, and the fuel filter 52 is set to be finer in pore size than the pre-pump filter 61. The fuel tank 42 has a fuel supply port 62 disposed on the front side of the front seat 36, and the fuel supply port 62 is closed with a fuel supply cap 63. The fuel tank 42 is inclined rearwardly downward from the position of the fuel supply port 62, and the fuel pump 41 is provided at a lower portion of the inclined part 64.

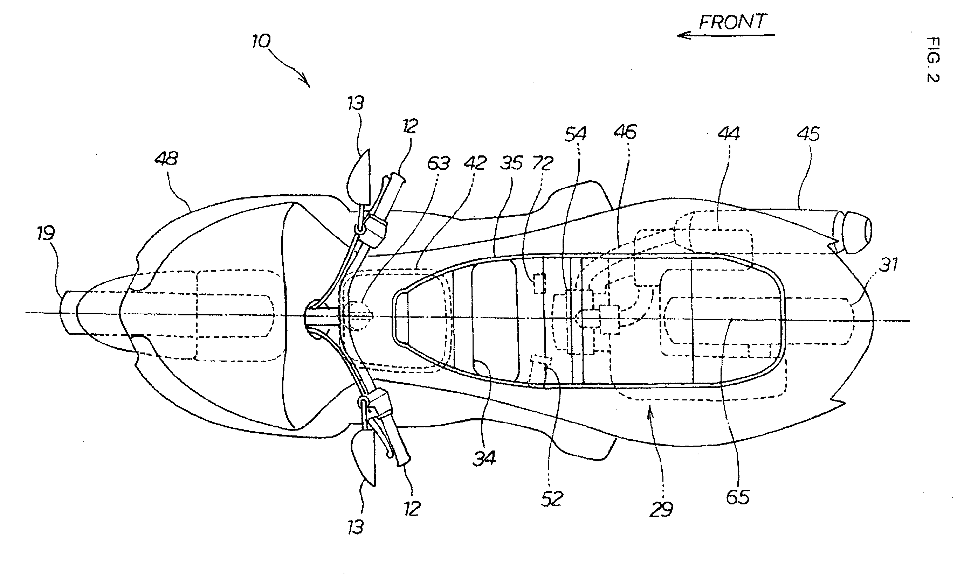

As shown in FIG. 2, the exhaust pipe 46 and the fuel filter 52 are laid out distributedly to the left and right sides of the vehicle with respect to the vehicle body center line 65. Specifically, the exhaust pipe 46 is disposed on the right side in the vehicle width direction, while the fuel filter 52 is disposed on the left side in the vehicle width direction.
The fuel filter 52 is disposed on the vehicle rear side of the bulged part 34 of the storage box 35.

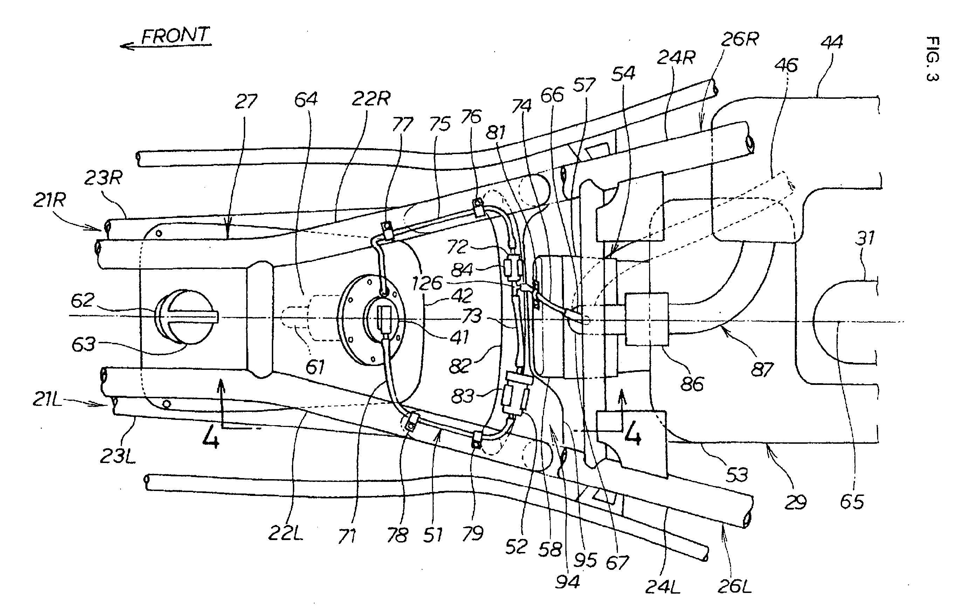

Now, layout of the fuel filter 52 in plan view will be described below.
As shown in FIG. 3, the fuel supply line 51 for supplying the engine 29 with the fuel is connected to the fuel tank 42. The fuel supply line 51 is provided with the pre-pump filter (FIG. 1, symbol 61) for clarifying the fuel in the fuel tank 42, the fuel pump 41 disposed on the downstream side of the pre-pump filter 61, the fuel filter 52 disposed on the downstream side of the fuel pump 41 and set to be finer in pore size than the pre-pump filter 61, and an injector 66 as a fuel supply device for supplying the fuel to the engine 29, which are laid out in this order along the fuel supply line 51.

In addition, these components are laid out in the order of fuel tank 42, the fuel filter 52, and the injector 66 from the front side, along the front-rear direction of the vehicle. Incidentally, the pre-pump filter 61 and the fuel pump 41 are provided in the fuel tank 42, and the injector 66 is mounted to an intake pipe 67.

Besides, the fuel supply line 51 is composed of a first fuel pipe 71 extended from the fuel pump 41 and connected to the fuel filter 52, a second fuel pipe 73 extended from the fuel filter 52 and connected to the upstream side of a pressure regulator 72, and a third fuel pipe 74 which is extended from a branching part 126 disposed on the upstream side of the pressure regulator 72 and which is connected to the injector 66. By this configuration, the fuel in the fuel tank 42 is supplied from the injector 66 to the engine 29 side.

Incidentally, the pressure regulator 72 returns a portion of the fuel to the fuel tank 42 through a return pipe 75 connecting the pressure regulator 72 and the fuel tank 42 to each other when the fuel pressure in the fuel supply line 51 between the fuel pump 41 and the injector 66 is increased to reach a predetermined pressure.
The return pipe 75 is held by pipe clips 76 and 77 provided on the main frame 21R.
In addition, the first fuel pipe 71 is held by pipe clips 78 and 79 provided on the main frame 21L, and the third fuel pipe 74 is held by a pipe clip 81 provided on the head over 58.
The pressure regulator 72 is disposed between the fuel filter 52 and the injector 66. Incidentally, it can be said that the pressure regulator 72 is disposed between the second fuel pipe 73 and the third fuel pipe 74.

The body frame 27 has a cross frame 82 which is disposed between the fuel tank 42 and the engine 29 and by which the pair of left and right main frames 21L and 21R are interconnected. More specifically, the cross frame 82 connects the pair of left and right lower frames 23L and 23R to each other. In addition, the fuel filter 52 is mounted to the cross frame 82, and is so disposed that the longitudinal direction of the fuel filter 52 is set along the extending direction of the cross frame 82 (the vehicle width direction).

The fuel filter 52 is held by a filter support bracket 83 (detailed later) provided on the cross frame 82, and the pressure regulator 72 is held by a regulator support bracket 84 provided on the cross frame 82.

An intake system 85 is composed of the intake pipe 67 connected to an upper portion of the cylinder head 57, a throttle body 86 connected to the intake pipe 67, and an air cleaner 44 connected to the throttle body 86 through a connecting tube 87.
The injector 66 is mounted to the intake pipe 67, and the fuel is supplied to the engine 29 side by the injector 66.

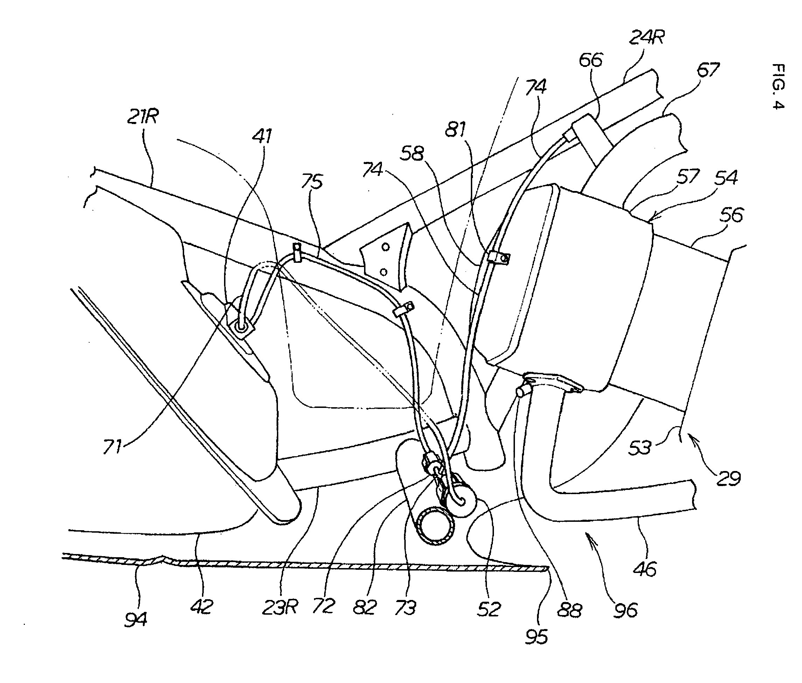

As shown in FIG. 4, the injector 66 as a fuel supply device is disposed at a position above the fuel filter 52.
In addition, the cylinder unit 54 projects from a front portion of the crankcase 53 toward an upper front side of the vehicle, and at least a part of the fuel filter 52 is disposed on the vehicle front side relative to the cylinder unit 54.

The fuel filter 52 is mounted to the cross frame 82 in such a manner that the lower end of the fuel filter 52 is located above the lower end of the cross frame 82.
An O₂ sensor 88 is provided at the cylinder head 57 in such a manner as to project into an exhaust port of the cylinder head 57.

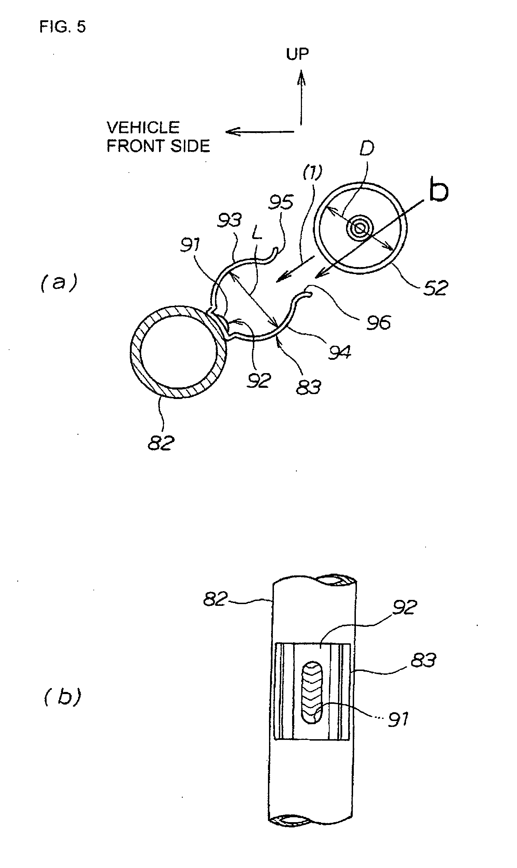

Now, mounting of the fuel filter 52, the filter support bracket 83 and the like will be described below. As shown in FIG. 5(a), the filter support bracket 83 mounted to the cross frame 82 is substantially C-shaped, and is formed of an elastically deformable material. The filter support bracket 83 is composed of a bottom part 92 in which a slot 91 is bored, arm parts 93 and 94 extending from both ends of the bottom part 92, and turn-back parts 95 and 96 provided at the tips of the arm parts 93 and 94.

The fuel filter 52 has a cylindrical shape with a diameter D. At the time of mounting the fuel filter 52, it is moved along arrow (1), to be pressed into the filter support bracket 83. By this, the turn-back parts 95 and 96 are pushed open wider, and, when the fuel filter 52 is moved to the depth of the filter support bracket 83, the fuel filter 52 is clamped between the arm parts 93 and 94.
At the time of dismounting the fuel filter 52, it is moved in the direction reverse to arrow (1), to be drawn out of the filter support bracket 83. By this, the turn-back parts 95 and 96 are pushed open wider, and, when the fuel filter 52 is moved from the depth of the filter support bracket 83, it is detached from the arm parts 93 and 94.
The distance L between the arm parts 93 and 94 is smaller than the diameter D, and, therefore, the fuel filter 52 is held by an elastic action of the filter support bracket.

Besides, the filter support bracket 83 is provided on the cross frame 82 in such a manner that its opening (mouth) faces toward a rear upper side of the vehicle.
Incidentally, the regulator support bracket (FIG. 3, symbol 84) is also substantially C-shaped and is formed of an elastically deformable material.
The regulator support bracket (FIG. 3, symbol 84) is provided on the cross frame (FIG. 3, symbol 82) in such a manner that its opening (mouth) faces toward a rear upper side of the vehicle.

FIG. 5(b) is a view taken along arrow b of FIG. 5(a), showing that the filter support bracket 83 is provided with the slot 91 in the bottom part 92 thereof, and is fixed to the cross frame 82 by welding this part. Symbol 93 denotes a weld part. Incidentally, the regulator support bracket 84 is also welded to the cross frame 82 in a similar manner.

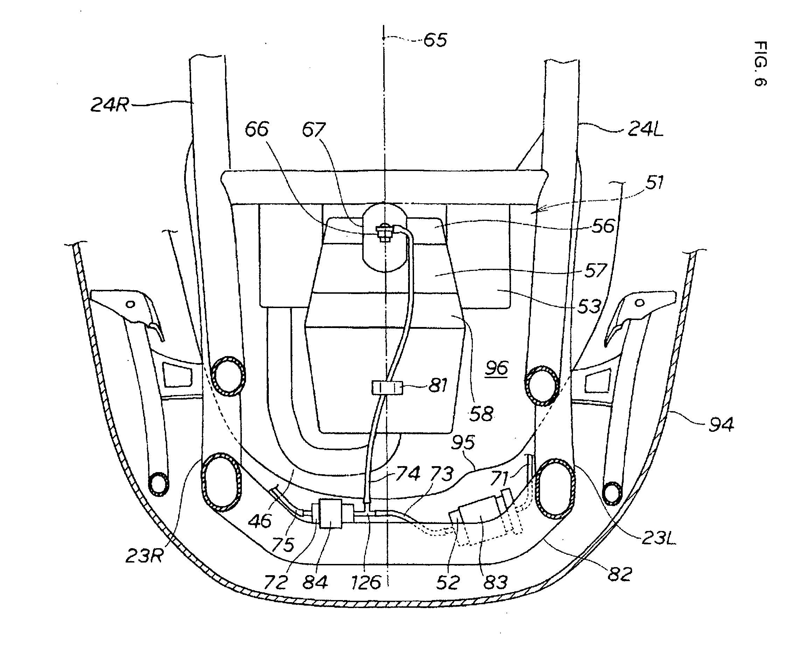

Now, a gap at the body cover 48 for mounting and dismounting the fuel filter 52 will be described below.
As shown in FIG. 6, the cross frame 82 is bridgingly interposed between the lower frame 23L and the lower frame 23R, and the fuel filter 52 and the pressure regulator 72 are mounted to the cross frame 82. A gap 96 is present on the rear side of a rear end portion 95 of an under cover 94 and on the front side of the crankcase 53, and mounting and dismounting of the fuel filter 52 can be carried out through this gap.

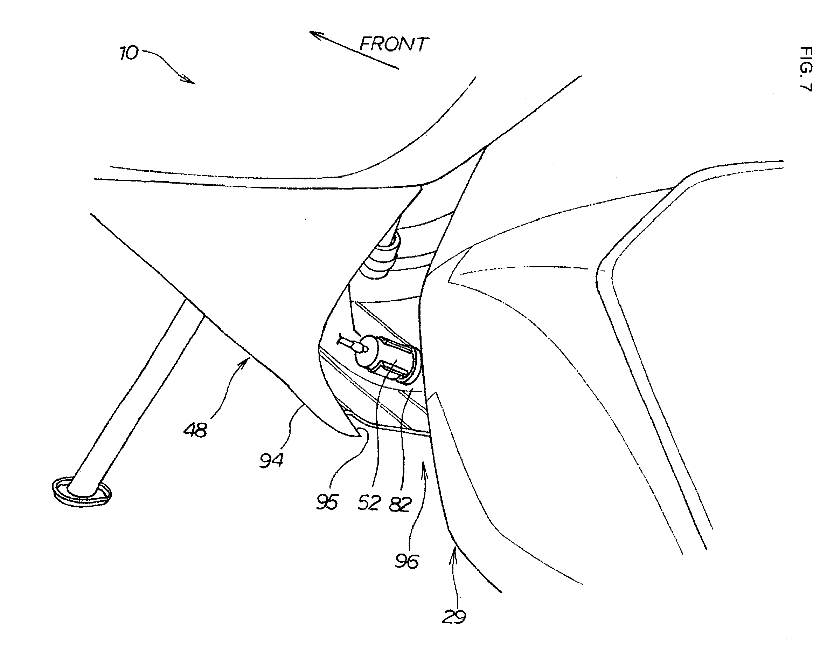

As shown in FIG. 7, the body cover 48 includes the under cover 94 for covering the main frames (FIG. 1, symbols 21L, R), the fuel tank (FIG. 1, symbol 42), and the fuel filter 52 from below. The gap 96 for avoiding interference of the swinging engine 29 with the under cover 94 is secured between the rear end portion 95 of the under cover 94 and the engine 29. The gap 96 is set to be greater than the outer shape of the fuel filter 52, for mounting and dismounting the fuel filter 52 therethrough.

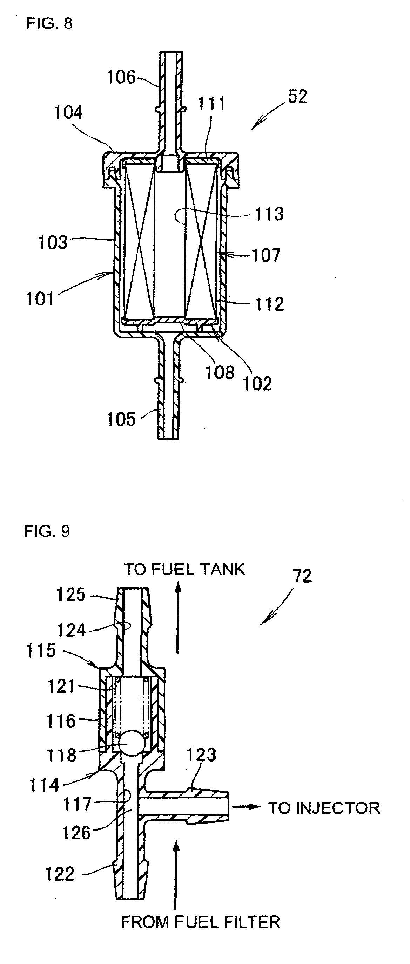

Now, the fuel filter 52 will be described below. As shown in FIG. 8, the fuel filter 52 is composed of a filter case 101, and a filter assembly 102 contained in the filter case 101.
The filter case 101 is composed of a case body 103 having a bottomed tubular shape, and a case cover 104 for closing an opening part of the case body 103.

The case body 103 is provided with a fuel suction port 105 which is connected to the first fuel pipe (FIG. 3, symbol 71) on the fuel tank (FIG. 3, symbol 42) side and through which the fuel is sucked in. The case cover 104 is provided with a fuel discharge port 106 which is connected to the second fuel pipe (FIG. 3, symbol 73) on the injector (FIG. 3, symbol 66) side and through which the fuel is discharged.

The filter assembly 102 is composed of a cylindrical filter 107 made of filter paper, and a frame bodies 108 and 111 for supporting both ends of the filter 107. The filter assembly 102 is fixed in the state of being clamped between the case body 103 and the case cover 104.

The fuel is sucked through the fuel suction port 105 into the filter case 101, then flows through the filter 107 from its outer peripheral surface 112 to its inner peripheral surface 113, when the fuel is filtered, and the filtered fuel is discharged through the fuel discharge port 106 to the exterior of the filter case 101.

Now, the pressure regulator 72 will be described below.
As shown in FIG. 9, the pressure regulator 72 is composed of a case 116 having a resin-made first case 114 and a resin-made second case 115 joined to each other, a copper-made spherical valve element 118 for opening and closing a passage hole 117 bored in the bottom on one end side of the case 116, a helical compression spring 121 for biasing the valve element 118 so as to close the passage hole 117, a fuel suction port 122 in which the passage hole 117 is bored, a fuel discharge port 123 formed at an intermediate part of the fuel suction port 122, a fuel return port 125 provided with a passage hole 124 bored in the bottom on the other end side of the case 116, and a branching part 126 formed between the fuel suction port 122 and the fuel discharge port 123 on the upstream side of the valve element 118.

The fuel suction port 122 is connected to the fuel filter (FIG. 3, symbol 52) through the second fuel pipe (FIG. 3, symbol 73), whereas the fuel discharge port 123 is connected to the injector (FIG. 3, symbol 66) through the third fuel pipe (FIG. 3, symbol 74), and the fuel return port 125 is connected to the fuel tank (FIG. 3, symbol 42) through the return pipe (FIG. 3, symbol 75).

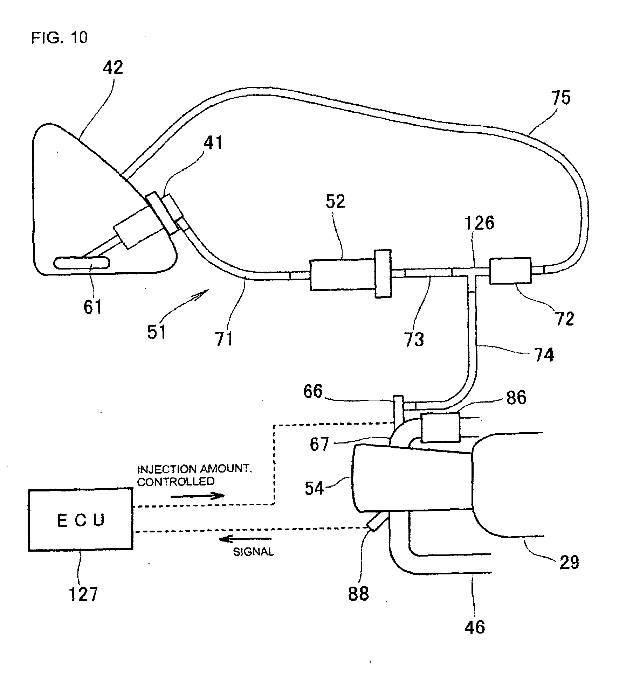

Now, a system diagram will be described below. As shown in FIG. 10, the fuel in the fuel tank 42 is supplied under pressure by the fuel pump 41 through the pre-pump filter 61, the first fuel pipe 71, the fuel filter 52, the second fuel pipe 73, the branching part 126 of the pressure regulator 72, and the third fuel pipe 74, to be supplied from the injector 66 to the engine 29 side.
Incidentally, the pressure regulator 72 returns a portion of the fuel to the fuel tank 42 through the return pipe 75 connecting the pressure regulator 72 and the fuel tank 42 to each other when the fuel pressure in the fuel supply line 51 between the fuel pump 41 and the injector 66 is increased to reach a predetermined pressure.

Besides, even in the case where, for example, a mixed fuel of ethanol and gasoline is used and the mixing ratio is changed due to fuel supply, fuel injection optimal for starting can be performed and the engine 29 can be started favorably, since the fuel before the change in the ethanol-gasoline mixing ratio is filling the fuel supply line 51 in the range from the fuel tank 42 to the fuel supply device 66 and this mixing ratio has already been learned by an ECU 127 mounted on the vehicle. In addition, after the starting of the engine 29, the change in the mixing ratio is re-learned by the ECU 127 on the basis of a signal from an O₂ sensor 88 or the like, and the fuel injection amount at the injector 66 is controlled, so as to perform fuel injection optimal for the ethanol-gasoline mixing ratio after the starting of the engine 29.

### [Example 2]

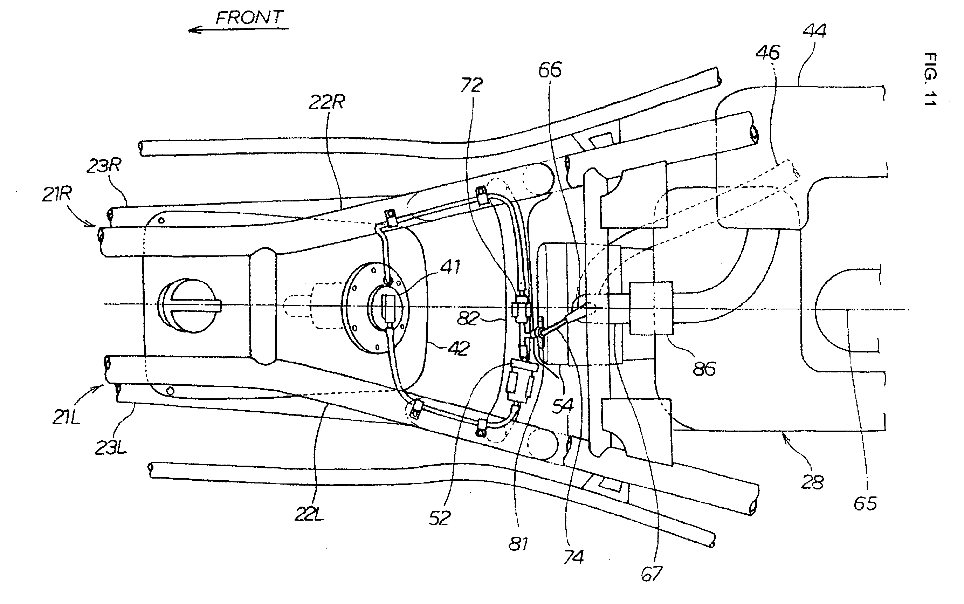

Now, Example 2 of the present invention will be described below, based on the drawing. Incidentally, the same components as those shown in FIG. 6 are denoted by the same symbols as used above, and detailed descriptions of these components will be omitted.
As shown in FIG. 11, the pressure regulator 72 is disposed on the vehicle body center line 65. Incidentally, the pressure regulator 72 may be disposed on the left side, in the vehicle width direction, relative to the vehicle center line 65.

Now, the above descriptions will be summarized as follows.
As shown in FIG. 1 above, the motorcycle 10 includes the body frame 27 having the head pipe 11 and the pair of left and right main frames 21L extending from the head pipe 11 toward the vehicle rear side, the engine 29 supported on the body frame 27, the fuel tank 42 supported on the body frame 27 on the vehicle front side relative to the engine 29, the fuel supply line 51 for feeding the fuel in the fuel tank 42 to the engine 29, and the fuel filter 52 disposed at an intermediate part of the fuel supply line 51, and, in this motorcycle 10, the body frame 27 has the cross frame 82 disposed between the fuel tank 42 and the engine 29 and connecting the pair of left and right main frames 21L, R to each other, and the fuel filter 52 is mounted to the cross frame 82.

This configuration ensures that, since the fuel filter 52 is supported on the cross frame 82, the fuel filter 52 can be firmly supported by the cross frame 82 while utilizing the space formed between the engine 29 and the fuel tank 42. Accordingly, it becomes possible to use a large-sized fuel filter 52 while contriving a reduction in material thickness of the body cover 48. In other words, it is possible to provide a motorcycle 10 in which the capacity of the fuel filter 52 can be set freely, without any restriction imposed by the body cover 48.

As shown in FIG. 4 above, the fuel filter 52 is mounted to the cross frame 82 in such a manner that the lower end of the fuel filter 52 is located above the lower end of the cross frame 82.
This configuration ensures that, since the fuel filter 52 is located above the lower end of the cross frame 82, the lower side of the fuel filter 52 can be protected by the cross frame 82.

As shown in FIG. 1 above, the engine 29 includes the crankcase 53 for containing the crankshaft therein, and the cylinder unit 54 projecting from the crankcase 53 toward the vehicle front side. An upper portion of the crankcase 53 is connected to the body frame 27 through the link 28, whereby the engine 29 is supported on the vehicle body frame 27 in a vertically swingable manner. The cross frame 82 is disposed at a position on the lower side and the vehicle front side relative to the cylinder unit 54, and the fuel filter 52 is mounted to the rear side of the cross frame 82 so that it can be mounted and dismounted from the vehicle rear side.

This configuration results in that a space in which the cylinder unit 54 can be swung vertically is secured on the upper and lower sides of the cylinder unit 54.
In addition, since the link 28 is mounted to an upper portion of the crankcase 53, a space in which the link 28 is not present can be secured on the front side of the crankcase 53 and on the lower side of the cylinder unit 54.
Thus, the space permitting the cylinder unit 54 to be swung therein is secured and the link 28 is not arranged, on the front side of the crankcase 53 and on the lower side of the cylinder unit 54; therefore, a comparatively large space is formed on the front side of the crankcase 53 and on the lower side of the cylinder unit 54. As a result, since the fuel filter 52 is mounted to the rear side of the cross frame 82 located on the lower and front side relative to the cylinder unit 54 projecting forward from the crankcase 53 in such a manner that the fuel filter 52 can be mounted and dismounted from the vehicle rear side, the fuel filter 52 can be mounted and dismounted while utilizing the space on the front side of the crankcase 53 and the lower side of the cylinder unit 54, so that the mounting and dismounting operations can be carried out easily.

As shown in FIGS. 2 and 6 above, the cylinder unit 54 is equipped with the exhaust pipe 46 extending from a lower portion thereof toward the vehicle rear side. With reference to the vehicle body center line 65, the exhaust pipe 46 is disposed on one side in the vehicle width direction, while the fuel filter 52 is disposed on the other side in the vehicle width direction.
This configuration ensures that, since the fuel filter 52 is disposed on the other side in the vehicle width direction with respect to the vehicle body center line 65 in relation to the exhaust pipe 46 which extends from a lower portion of the cylinder unit 54 toward the vehicle rear side, the exhaust pipe 46 does not obstruct mounting and dismounting of the fuel filter 52, so that the mounting and dismounting operations can be carried out easily.

As shown in FIG. 7 above, the motorcycle 10 has the under cover 94 for covering the main frames 21L, R, the fuel tank 42 and the fuel filter 52 from below. The gap 96 for avoiding the interference of the swinging engine 29 with the under cover 94 is secured between the rear end portion 95 of the under cover 94 and the engine 29. The gap 96 is set to be larger than the outer shape of the fuel filter 52, for mounting and dismounting the fuel filter 52 therethrough.

This configuration ensures that, since the lower side of the fuel filter 52 is covered by the under cover 94, deposition of muddy water or the like on the fuel filter 52 can be prevented.
In addition, since the gap 96 greater than the outer shape of the fuel filter 52 is provided between the under cover 94 and the fuel filter 52, operations of mounting and dismounting the fuel filter 52 can be easily performed through the gap 96 without dismounting other component parts of the vehicle.
Further, since it is unnecessary to provide such a component part as a maintenance lid, an increase in the number of component parts can be suppressed.

As shown in FIG. 4 above, the cylinder unit 54 project from a front portion of the crankcase 53 toward an upper front side, and at least a part of the fuel filter 52 is disposed on the front side relative to the cylinder unit 54.

This configuration results in that the space formed between the cylinder unit 54 and the ground is widened along the direction toward the vehicle front side. Therefore, with at least a part of the fuel filter 52 being disposed on the front side relative to the cylinder unit 54, the space widened along the direction toward the vehicle front side can be utilized, and a large-sized fuel filter 52 can be arranged.

As shown in FIG. 3 above, the fuel filter 52 is disposed with its longitudinal direction set along the extending direction of the cross frame 82.
This configuration ensures that, since the amount of projection of the fuel filter 52 from the cross frame 82 is suppressed, the under cover 94 shown in FIG. 4 which covers the lower side of the fuel filter 52 can be made smaller in size.

As shown in FIG. 5 above, the cross frame 82 is provided with the filter support bracket 83 which is substantially C-shaped in section, and the fuel filter 82 is dismountably mounted to the filter support bracket 83 by elastically deforming the filter support bracket 83.
This configuration ensures that, since the fuel filter 52 is dismountably mounted through elastic deformation of the filter support bracket 83, the fuel filter 52 can be mounted and dismounted easily, without using any tool.
Further, since the fuel filter 52 can be mounted and dismounted without using any tool, mounting and dismounting of the fuel filter 52 can be easily carried out through the space which is formed on the front side of the crankcase 53 and the lower side of the cylinder unit 54 as shown in FIG. 4.

As shown in FIG. 4 above, the fuel supply line 51 is equipped with the fuel supply device 66 for supplying the fuel in the fuel tank 42 to the engine 29, and the fuel pump 41 by which the fuel in the fuel tank 42 is supplied under pressure to the fuel supply device 66, and the fuel supply device 66 is disposed at a position above the fuel filter 52.
This configuration ensures that, since the fuel supply line 51 between the fuel filter 52 and the fuel supply device 66 extends upward from the fuel filter 52, leakage of the fuel from the fuel supply device 66 due to the weight of the fuel collected in the fuel filter 52 can be restrained, even in the case where the vehicle is parked for a long period of time.

As shown in FIG. 3 above, the fuel supply line 51 is provided with the pressure regulator 72 which is disposed between the fuel filter 52 and the fuel supply device 66 and by which a portion of the fuel is returned to the fuel tank 42 when the fuel pressure between the fuel pump 41 and the fuel supply device 66 is increased to reach a predetermined pressure. The pressure regulator 72 and the fuel filter 52 are provided between the fuel pump 41 and the fuel supply device 66 in the vehicle front-rear direction.
This configuration ensures that the fuel supply line 51 in the range from the fuel pump 41 to the fuel supply device 66 can be prevented from becoming redundant.

As shown in FIG. 5 above, the fuel supply line 51 is provided with the pre-pump filter 61 on the upstream side of the fuel pump 41, and the fuel filter 52 is set to be finer in pore size than the pre-pump filter 61.

This configuration ensures that, since the pore size of the fuel filter 52 and the pore size of the pre-pump filter 61 are set to be different, it is possible, even in the case of using a fuel in which fine dust is contained such as ethanol, to trap coarser dust by the pre-pump filter 61 and to trap by the fuel filter 52 the finer dust having failed to be trapped by the pre-pump filter 61. Accordingly, such a fuel as ethanol can be used.
In addition, since coarser dust is trapped by the pre-pump filter 61 and therefore coarser dust is not trapped by the fuel filter 52, the possibility of clogging of the fuel filter 52 can be lowered, and the frequency of replacement of the fuel filter 52 can be reduced. Furthermore, the pre-pump filter 61 is coarse in pore size and therefore the possibility of clogging of the pre-pump filter 61 can be lowered, so that the pre-pump filter 61 is restrained from constituting a resistance against the operation of the fuel pump 41. Accordingly, an inexpensive fuel pump 41 can be adopted.

Incidentally, application of the present example is not limited to the motorcycle 10 on which an engine using gasoline as a fuel is mounted; for instance, the present example may be applied to a motorcycle 10 on which an engine 29 using such a biofuel as ethanol as a fuel is mounted, insofar as the fuel can be clarified by the fuel filter 52.

### [Industrial Applicability]

The present invention is preferable for an improvement in a motorcycle, specifically, for layout of a fuel filter provided in a motorcycle.

### [Description of Reference Symbols]

10 ... Motorcycle, 11 ... Head pipe, 21L, 21R ...
Main frame, 23L, 23R ... Lower frame, 27 ... Body frame, 28 ... Link, 29 ... Engine, 41 ... Fuel pump, 42 ... Fuel tank, 46 ... Exhaust pipe, 48 ... Body cover, 51 ... Fuel supply line, 52 ... Fuel filter, 53 ... Crankcase, 54 ... Cylinder unit, 61 ... Pre-pump filter, 65 ... Vehicle body center line, 66 ... Fuel supply device (injector), 72 ... Pressure regulator, 82 ... Cross frame, 83 ... Filter support bracket, 94 ... Under cover, 95 ... Rear end portion of under cover, 96 ... Gap.

## Claims

1. A motorcycle (10) comprising a body frame (27) having a head pipe (11) and a pair of left and right main frames (21L, 21R) extending from the head pipe (11) toward a vehicle rear side, an engine (29) supported on the body frame (27), a fuel tank (42) supported on the body frame (27) on a vehicle front side relative to the engine (29), a fuel supply line (51) through which a fuel in the fuel tank (42) is adapted to be supplied to the engine (29), and a fuel filter (52) disposed at an intermediate part of the fuel supply line (51),
wherein the body frame (27) has a cross frame (82) which is disposed between the fuel tank (42) and the engine (29) and which connects the pair of left and right main frames (21L, 21R) to each other, and
the fuel filter (52) is mounted to the cross frame (82)
in such a manner that a lower end of the fuel filter (52) is located above a lower end of the cross frame (82), and
the engine (29) has a crankcase (53) for containing a crankshaft therein, and a cylinder unit (54) projecting from the crankcase (53) toward the vehicle front side, and the cross frame (82) is located on a lower side and the vehicle front side relative to the cylinder unit (54), **characterized in that** an upper portion of the crankcase (53) is connected to the body frame (27) through a link (28), whereby the engine (29) is supported on the body frame (27) in a vertically swingable manner,
and the fuel filter (52) is mounted to a rear side of the cross frame (82) in such a manner that the fuel filter (52) can be mounted and dismounted from the vehicle rear side.

2. The motorcycle according to claim 1,
wherein the cylinder unit (54) has an exhaust pipe (46) extending from a lower portion thereof toward the vehicle rear side, and
the exhaust pipe (46) is disposed on one side in a vehicle width direction of a vehicle body center line (65), and the fuel filter (52) is disposed on the other side in the vehicle width direction of the vehicle body center line (65).

3. The motorcycle according to claim 1 or 2,
wherein the motorcycle (10) comprises an under cover (94) for covering the pair of left and right main frames (21L,21R), the fuel tank (42) and the fuel filter (52) from below, and a gap (96) for avoiding interference of the swinging engine (29) with the under cover (94) is secured between a rear end portion (95) of the under cover (94) and the engine (29), and
the gap (96) is set to be greater than an outer shape of the fuel filter (52) so as to permit the fuel filter (52) to be mounted and dismounted therethrough.

4. The motorcycle according to claim 1, 2 or 3, wherein the cylinder unit (54) projects from a front portion of the crankcase (53) toward an upper front side, and at least a part of the fuel filter (52) is disposed on a front side relative to the cylinder unit (54).

5. The motorcycle according to any of claims 1 to 4, wherein the fuel filter (52) is disposed with its longitudinal direction set along the extending direction of the cross frame (82).

6. The motorcycle according to any of claims 1 to 5,
wherein the cross frame (82) is provided with a filter support bracket (83) which is substantially C-shaped in section, and
the fuel filter (52) is dismountably mounted on the filter support bracket (83) through elastic deformation of the filter support bracket (83).

7. The motorcycle according to any of claims 1 to 6,
wherein the fuel supply line (51) is provided with a fuel supply device (66) by which the fuel in the fuel tank (42) is adapted to be supplied to the engine (29), and with a fuel pump (41) by which the fuel in the fuel tank (42) is adapted to be supplied under pressure to the fuel supply device (66), and
the fuel supply device (66) is disposed at a position above the fuel filter (52).

8. The motorcycle according to claim 7,
wherein the fuel supply line (51) is provided with a pressure regulator (72) which is disposed between the fuel filter (52) and the fuel supply device (66) and by which a portion of the fuel is adapted to be returned to the fuel tank (42) when the fuel pressure between the fuel pump (41) and the fuel supply device (66) is increased to reach a predetermined pressure, and
the pressure regulator (72) and the fuel filter (52) are provided between the fuel pump (41) and the fuel supply device (66) in a vehicle front-rear direction.

9. The motorcycle according of claim 7 or 8,
wherein the fuel supply line (51) is provided with a pre-pump filter (61) on an upstream side of the fuel pump (41), and
the fuel filter (52) is set to be finer in pore size than the pre-pump filter (61).

## Patentansprüche

1. Motorrad (10), umfassend einen Karosserierahmen (27) mit einem Kopfrohr (11) und einem Paar von linken und rechten Hauptrahmen (21 L, 21 R), die sich von dem Kopfrohr (11) zu einer Fahrzeugrückseite hin erstrecken, eine an dem Karosserierahmen (27) getragene Brennkraftmaschine (29), einen an dem Karosserierahmen (27) getragenen Kraftstofftank (42) an einer Fahrzeugvorderseite relativ zur Brennkraftmaschine (29), eine Kraftstoffzufuhrleitung (51), durch welche ein Kraftstoff in dem Kraftstofftank (42) der Brennkraftmaschine (29) zugeführt werden kann, sowie einen Kraftstofffilter (52), der an einem Zwischenteil der Kraftstoffzufuhrleitung (51) angeordnet ist, wobei der Karosserierahmen (27) einen Querrahmen (82) aufweist, der zwischen dem Kraftstofftank (42) und der Brennkraftmaschine (29) angeordnet ist und der das Paar von linken und rechten Hauptrahmen (21 L, 21 R) miteinander verbindet, und wobei der Kraftstofffilter (52) an dem Querrahmen (82) derart montiert ist, dass ein unteres Ende des Kraftstofffilters (52) über einem unteren Ende des Querrahmens (82) lokalisiert ist, und wobei die Brennkraftmaschine (29) ein Kurbelgehäuse (53) zur Aufnahme einer Kurbelwelle darin aufweist, sowie eine Zylindereinheit (54), die von dem Kurbelgehäuse (53) zur Fahrzeugvorderseite hin vorsteht, und wobei der Querrahmen (82) an einer unteren Seite und an der Fahrzeugvorderseite relativ zur Zylindereinheit (54) lokalisiert ist,
**dadurch gekennzeichnet, dass** ein oberer Bereich des Kurbelgehäuses (53) durch eine Verbindung (28) mit dem Karosserierahmen (27) verbunden ist, wodurch die Brennkraftmaschine (29) an dem Karosserierahmen (27) in einer vertikal schwingfähigen Weise getragen ist, und dass der Kraftstofffilter (52) an einer Rückseite des Querrahmens (82) derart montiert ist, dass der Kraftstofffilter (52) von der Fahrzeugrückseite montiert und abmontiert werden kann.

2. Motorrad nach Anspruch 1, wobei die Zylindereinheit (54) ein Abgasrohr (46) aufweist, dass sich von einem unteren Bereich derselben zur Fahrzeugrückseite hin erstreckt, und wobei das Abgasrohr (46) an einer Seite in einer Fahrzeugbreitenrichtung einer Fahrzeugkarosseriemittellinie (65) angeordnet ist, und der Kraftstofffilter (52) an der anderen Seite in der Fahrzeugbreitenrichtung der Fahrzeugkarosseriemittellinie (65) angeordnet ist.

3. Motorrad nach Anspruch 1 oder 2, wobei das Motorrad (10) eine untere Abdeckung (94) zum Abdecken des Paars von linken und rechten Hauptrahmen (21L, 21R), des Kraftstofftanks (42) und des Kraftstofffilters (52) von unten umfasst, und eine Lücke (96) zur Vermeidung einer Interferenz der schwingenden Brennkraftmaschine (29) mit der unteren Abdeckung (94) zwischen einem hinteren Endbereich (95) der unteren Abdeckung (94) und der Brennkraftmaschine (29) sichergestellt ist, und wobei die Lücke (96) größer eingestellt ist als eine Außenform des Kraftstofffilters (52), um zu ermöglichen, dass der Kraftstofffilter (52) durch sie hindurch montiert und abmontiert werden kann.

4. Motorrad nach Anspruch 1, 2 oder 3, wobei die Zylindereinheit (54) von einem vorderen Bereich des Kurbelgehäuses (53) zu einer oberen Vorderseite hin vorsteht, und wobei wenigstens ein Teil des Kraftstofffilters (52) an einer Vorderseite relativ zur Zylindereinheit (54) angeordnet ist.

5. Motorrad nach einem der Ansprüche 1 bis 4, wobei der Kraftstofffilter (52) so angeordnet ist, dass seine longitudinale Richtung entlang der Erstreckungsrichtung des Querrahmens (82) eingestellt ist.

6. Motorrad nach einem der Ansprüche 1 bis 5, wobei der Querrahmen (82) mit einer Filtertragklammer (83) versehen ist, die einen im Wesentlichen C-förmigen Querschnitt hat, und wobei der Kraftstofffilter (52) abmontierbar an der Filtertragklammer (83) durch elastische Verformung der Filtertragklammer (83) montiert ist.

7. Motorrad nach einem der Ansprüche 1 bis 6, wobei die Kraftstoffzufuhrleitung (51) mit einer Kraftstoffzufuhrvorrichtung (66) versehen ist, durch welche der Kraftstoff in dem Kraftstofftank (42) der Brennkraftmaschine (29) zugeführt werden kann, sowie mit einer Kraftstoffpumpe (41), durch welche der Kraftstoff in dem Kraftstofftank (42) unter Druck der Kraftstoffzufuhrvorrichtung (66) zugeführt werden kann, und wobei die Kraftstoffzufuhrvorrichtung (66) an einer Position über dem Kraftstofffilter (52) angeordnet ist.

8. Motorrad nach Anspruch 7, wobei die Kraftstoffzufuhrleitung (51) mit einem Druckregler (72) versehen ist, der zwischen dem Kraftstofffilter (52) und der Kraftstoffzufuhrvorrichtung (66) angeordnet ist, und durch den ein Teil des Kraftstoffs zu dem Kraftstofftank (42) zurückgeführt werden kann, wenn der Kraftstoffdruck zwischen der Kraftstoffpumpe (41) und der Kraftstoffzufuhrvorrichtung (66) soweit ansteigt, dass er einen vorbestimmten Druck erreicht, und
wobei der Druckregler (72) und der Kraftstofffilter (52) zwischen der Kraftstoffpumpe (41) und der Kraftstoffzufuhrvorrichtung (66) in einer Fahrzeugvorne-hinten-Richtung vorgesehen sind.

9. Motorrad nach Anspruch 7 oder 8, wobei die Kraftstoffzufuhrleitung (51) mit einem Vorpumpenfilter (61) an einer stromaufwärtigen Seite der Kraftstoffpumpe (41) versehen ist, und wobei der Kraftstofffilter (52) mit einer feineren Porengröße eingestellt ist als der Vorpumpenfilter (61).

## Revendications

1. Motocyclette (10) comprenant un châssis (27) ayant un tuyau de refoulement (11) et une paire de cadres principaux gauche et droit (21L, 21R) s'étendant à partir du tuyau de refoulement (11) vers un côté arrière du véhicule, un moteur (29) supporté sur le châssis (27), un réservoir de carburant (42) supporté sur le châssis (27) d'un côté avant du véhicule par rapport au moteur (29), une conduite d'alimentation en carburant (51) à travers laquelle un carburant dans le réservoir de carburant (42) est adapté pour être amené au moteur (29), et un filtre à carburant (52) disposé au niveau d'une partie intermédiaire de la conduite d'alimentation en carburant (51),
dans laquelle le châssis (27) a un cadre transversal (82) qui est disposé entre le réservoir de carburant (42) et le moteur (29) et qui raccorde la paire de cadres principaux gauche et droit (21L, 21R) l'un à l'autre, et
le filtre à carburant (52) est monté sur le cadre transversal (82) de sorte qu'une extrémité inférieure du filtre à carburant (52) est positionnée au-dessus d'une extrémité inférieure du cadre transversal (82), et
le moteur (29) a un carter de vilebrequin (53) pour contenir un vilebrequin à l'intérieur de ce dernier, et une unité de cylindre (54) faisant saillie du carter de vilebrequin (53) vers le côté avant du véhicule, et le cadre transversal (82) est positionné sur un côté inférieur et le côté avant du véhicule par rapport à l'unité de cylindre (54), **caractérisée en ce que**
une partie supérieure du carter de vilebrequin (53) est raccordée au châssis (27) par le biais d'une liaison (28), moyennant quoi le moteur (29) est supporté sur le châssis (27) d'une manière verticalement oscillante,
et le filtre à carburant (52) est monté sur un côté arrière du cadre transversal (82) de sorte que le filtre à carburant (52) peut être monté et démonté à partir du côté arrière du véhicule.

2. Motocyclette selon la revendication 1,
dans laquelle l'unité de cylindre (54) a un tuyau d'échappement (46) s'étendant à partir de sa partie inférieure vers le côté arrière du véhicule, et
le tuyau d'échappement (46) est disposé sur un côté dans le sens de la largeur du véhicule d'un axe central (65) d'une carrosserie de véhicule, et le filtre à carburant (52) est disposé de l'autre côté dans le sens de la largeur du véhicule de l'axe central (65) de la carrosserie de véhicule.

3. Motocyclette selon la revendication 1 ou 2,
dans laquelle la motocyclette (10) comprend un couvercle inférieur (94) pour recouvrir la paire de cadres principaux gauche et droit (21L, 21R), le réservoir de carburant (42) et le filtre à carburant (52) de dessous, et un espace (96) pour éviter l'interférence du moteur oscillant (29) avec le couvercle inférieur (94) est fixé entre une partie d'extrémité arrière (95) du couvercle inférieur (94) et le moteur (29), et
l'espace (96) est déterminé pour être supérieur à une forme externe du filtre à carburant (52) afin de permettre au filtre à carburant (52) d'être monté et démonté à travers ce dernier.

4. Motocyclette selon la revendication 1, 2 ou 3, dans laquelle l'unité de cylindre (54) fait saillie d'une partie avant du carter de vilebrequin (53) vers un côté avant supérieur et au moins une partie du filtre à carburant (52) est disposée sur un côté avant par rapport à l'unité de cylindre (54).

5. Motocyclette selon l'une quelconque des revendications 1 à 4, dans laquelle le filtre à carburant (52) est disposé avec sa direction longitudinale déterminée le long de la direction d'extension du cadre transversal (82).

6. Motocyclette selon l'une quelconque des revendications 1 à 5,
dans laquelle le cadre transversal (82) est prévu avec une console de support de filtre (83) qui est sensiblement en forme de C en coupe, et
le filtre à carburant (52) est monté de manière démontable sur la console de support de filtre (83) par le biais de la déformation élastique de la console de support de filtre (83).

7. Motocyclette selon l'une quelconque des revendications 1 à 6,
dans laquelle la conduite d'alimentation en carburant (51) est prévue avec un dispositif d'alimentation en carburant (66) grâce auquel le carburant dans le réservoir de carburant (42) est adapté pour être amené au moteur (29), et avec une pompe à carburant (41) grâce à laquelle le carburant dans le réservoir de carburant (42) est adapté pour être amené sous pression, jusqu'au dispositif d'alimentation en carburant (66), et
le dispositif d'alimentation en carburant (66) est disposé dans une position au-dessus du filtre à carburant (52).

8. Motocyclette selon la revendication 7,
dans laquelle la conduite d'alimentation en carburant (51) est prévue avec un régulateur de pression (72) qui est disposé entre le filtre à carburant (52) et le dispositif d'alimentation en carburant (66) et grâce auquel une partie du carburant est adaptée pour être ramenée vers le réservoir de carburant (42) lorsque la pression de carburant entre la pompe à carburant (41) et le dispositif d'alimentation en carburant (66) est augmentée pour atteindre une pression prédéterminée, et
le régulateur de pression (72) et le filtre à carburant (52) sont prévus entre la pompe à carburant (41) et le dispositif d'alimentation en carburant (66) dans une direction avant-arrière du véhicule.

9. Motocyclette selon la revendication 7 ou 8,
dans laquelle la conduite d'alimentation en carburant (51) est prévue avec un filtre de pré-pompe (61) sur un côté en amont de la pompe à carburant (41), et
le filtre à carburant (52) est déterminé pour avoir une taille de pore plus fine que le filtre de pré-pompe (61).
